# EUROPEAN PATENT APPLICATION

(11) **EP 4 603 447 A1**
(43) Date of publication of application: **20.08.2025**
(21) Application number: 24157950.7
(22) Date of filing: 15.02.2024
(51) Int. Cl.: C01B 3/04, B01J 23/755, B01J 35/30

(54) **METHOD FOR PRODUCING HYDROGEN PRODUCT**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: TRUNK, Sebastian, 60388 Frankfurt am Main (DE); PONTZEN, Florian, 60388 Frankfurt am Main (DE); SCHACK, Dominik, 60388 Frankfurt am Main (DE); VICARI, Lorenzo, 60439 Frankfurt am Main (DE); ULBER, Dieter, 60439 Frankfurt am Main (DE); BERTAIL, Caroline, 78350 Jouy-en-Josas (FR); SCHMIDT, Robin, 60388 Frankfurt am Main (DE)
(74) Representative: Air Liquide

(57) **Abstract**

Method for producing a hydrogen product from ammonia, comprising the steps of:
- Providing an ammonia feed stream;
- Passing the ammonia feed stream to at least one ammonia pre-cracking reactor for producing a partly converted ammonia feed stream comprising ammonia, hydrogen and nitrogen by a pre-cracking reaction, said pre-cracking reactor comprising a pre-cracking catalyst bed comprising from 20 wt% to 60 wt% of nickel, preferably from 25 wt% to 50 wt% of nickel as a pre-cracking catalytically active material,
- Passing the partly converted ammonia feed stream to an ammonia cracking reactor for producing an effluent gas stream comprising hydrogen and nitrogen and optionally also unconverted ammonia by a cracking reaction, said cracking reactor comprising a cracking catalyst bed comprising from 10 wt% to 20 wt% of nickel as a cracking catalytically active material.

## Description

The field of the present invention is that of a method for producing hydrogen product from ammonia. The present invention also relates to a system for producing hydrogen product from ammonia

The production of a hydrogen product by an endothermic cracking reaction of ammonia feedstock can be done in a cracking reactor at elevated temperature. Such a cracker typically comprises a metallic shell, a catalyst and an external heat source. The process requires a high quantity of heat and energy. The production of an effluent gas product comprising hydrogen by an endothermic cracking reaction of an ammonia feedstock stream can be done in a catalytic unit at elevated temperatures, generally from 400°C to 800°C. To achieve a lowest possible CO₂ footprint for the cracking process, the external heat source is provided by a combustion of an ammonia fuel stream in a furnace. The heat is transferred to a catalyst which promotes the cracking reaction, said catalyst requiring a high quantity of heat and energy for promoting the cracking reaction. If the temperature is too low for the catalyst to promote the cracking reaction, the ammonia conversion rate is significantly decreased. The disadvantage of such process is that it requires a lot of external energy and the conversion rate of the ammonia feedstock stream may be low. These represent challenges for the scalability of such processes.

A system comprising an adiabatic pre-cracking reactor followed by a cracking reactor for producing hydrogen from ammonia is known from the prior art. Such a system is working with the same iron-based catalyst in both the pre-cracking reactor and the cracking reactor. Such iron-based catalyst is preferred for its low cost but are subject to the formation of iron nitrides when contacted with ammonia at temperatures above 500°C. The pre-cracking reactor is running at a lower temperature and enables to convert part of the ammonia as an initial step in the process, thus protecting the iron-based catalyst in the downstream cracking reactor operated at higher temperatures.

There is currently a need to improve the reaction yield for the production of hydrogen from ammonia at a reasonable cost.

An aim of the present invention is to improve the hydrogen production in order to increase the yield of the pre-cracking and cracking stages and reduce the cost of the production method.

For this purpose, the invention proposes a system for producing a hydrogen product from ammonia comprising:
- at least one pre-cracking reactor arranged to receive an ammonia feed stream for producing a partly converted ammonia feed stream comprising ammonia, hydrogen and nitrogen, said at least one pre-cracking reactor comprising a pre-cracking catalyst bed comprising from, 20 wt% to 60 wt% of nickel, preferably from 25 wt% to 50 wt% of nickel, as a pre-cracking catalytically active material,
- at least one ammonia cracking reactor arranged to receive the partly converted ammonia feed stream for producing an effluent gas stream comprising hydrogen and nitrogen and optionally also unconverted ammonia, said ammonia cracking reactor comprising a cracking catalyst bed comprising from 10 wt% to 20 wt% of nickel as a cracking catalytically active material.

A catalyst is a substance that can be added to a reaction to increase the reaction rate without getting consumed in the process. An advantage of the present invention is that the adjusted nickel content of the pre-cracking catalyst on one side and of the cracking catalyst on the other enables a high catalytic activity, leading to a high reaction rate in the pre-cracking reactor and ammonia cracking reactor system of the invention. Furthermore, nickel has a good kinetics at reasonable costs.

According to one aspect of the invention, the pre-cracking catalyst bed comprises a pre-cracking carrier with said pre-cracking catalytically active material on the pre-cracking carrier. In particular, said pre-cracking carrier comprises a material chosen among MgO, CaO(Al₂O₃)ₙ, MgAl₂O₄, AL₂O₃, ZrO₂.

According to one aspect of the invention, the pre-cracking catalyst bed comprises a plurality of pre-cracking catalyst pellets comprising the pre-cracking carrier and the pre-cracking catalytically active material on the pre-cracking carrier.

According to one aspect of the invention, the cracking catalyst bed comprises a cracking carrier with said cracking catalytically active material on the cracking carrier. In particular, said cracking carrier comprises a material chosen among Al₂O₃, in particular α-Al₂O₃, CaIAl₂O₄, in particular a-CaIAl₂O₄, K/CaAl₂O₄, α-K/CaAl₂O₄, CaK2Al22O34, MgAl₂O₄.

According to one aspect of the invention, the cracking catalyst bed comprises a plurality of cracking catalyst pellets comprising the cracking carrier and the cracking catalytically active material on the cracking carrier.

The selected carriers of the pre-cracking catalyst bed on one side and of the cracking catalyst bed on the other side improve the stability of the catalyst beds and thus improve reaction efficiency.

The catalytic activity, in particular in connection with a different catalytic activity when comparing two different catalysts, is understood to mean the degree of conversion achieved per unit length of the catalyst bed from starting materials to products. The activity is influenced by the chemical composition (the catalytically active material and the carrier material), the doping (the introduction into the carrier material of components which alter its original properties), available surface, etc. of the catalyst bed, but also by the geometry (e.g., shape) of the catalyst pellets and textural parameters e.g., its porosity or loading.

According to one aspect of the invention, the metallic surface area of the pre-cracking catalyst pellets is higher than the metallic surface area of the cracking catalyst pellets. In particular, the metallic surface area of the pre-cracking catalyst pellets is 50% more or 25% more times the metallic surface area of the cracking catalyst pellets.

According to one aspect of the invention, the metallic surface area of the pre-cracking catalyst pellets is comprised between 10 m².g⁻¹ and 35 m².g⁻¹.

According to one aspect of the invention, the metallic surface area of the cracking catalyst pellets is comprised between 2 m².g⁻¹ and 4 m².g⁻¹.

According to one aspect of the invention, the nickel dispersion in the pre-cracking catalyst pellets is comprised between 3% and 9%.

According to one aspect of the invention, the nickel dispersion in the cracking catalyst pellets is comprised between 3% and 6%.

According to one aspect of the invention, the average nickel crystallite size in the pre-cracking catalyst pellets is comprised between 10nm and 30nm.

According to one aspect of the invention, the average nickel crystallite size in the cracking catalyst pellets is comprised between 15nm and 40nm.

According to one aspect of the invention, the metallic surface area of the pre-cracking catalyst pellets, the nickel dispersion in the pre-cracking catalyst pellets, and/or the average nickel crystallite size in the pre-cracking catalyst pellets is measured by hydrogen chemisorption analysis, the metallic surface area, the nickel dispersion, and/or the average nickel crystallite size being determined from the hydrogen adsorption isotherms, in particular following the ASTM D3908-20 standard procedure.

According to one aspect of the invention, the metallic surface area of the cracking catalyst pellets, the nickel dispersion in the cracking catalyst pellets, and/or the average nickel crystallite size in the cracking catalyst pellets is measured by hydrogen chemisorption analysis, the metallic surface area, the nickel dispersion, and/or the average nickel crystallite size being determined from the hydrogen adsorption isotherm, in particular following the ASTM D3908-20 standard procedure.

In particular, prior to the hydrogen chemisorption measurement, the pre-cracking catalyst or the cracking catalyst is degassed between 150 and 250°C, under vacuum, with a temperature rate comprised between 1 and 10°C per minute and then maintained in that state during a time of between 1 and 2 hours. Then, the degassed pre-cracking catalyst is reduced between 350°C and 450°C or the degassed cracking catalyst is reduced between 450°C and 600°C, by flowing pure hydrogen at a temperature rate between 1°C and 10°C per minute. The pre-cracking catalyst or cracking catalyst is then maintained in that state during a time of between 1 and 2 hours. The pre-cracking catalyst or the cracking catalyst is next evacuated at a similar temperature than for the reduction, under vacuum, during a time of between 1 and 2 hours, to remove the adsorbed hydrogen from the surface.

The pre-cracking catalyst or the cracking catalyst is then cooled to 40°C to get to the temperature for the hydrogen chemisorption measurement. Hydrogen is then titrated incrementally onto the catalyst at 40°C and the pressure is recorded after each incremental increase of pressure allowing enough time to reach equilibrium.

In particular, the ASTM D3908-20 standard is applied for calibration.

According to one aspect of the invention, the porosity of the pre-cracking catalyst pellets is higher than the porosity of the cracking catalyst pellets.

According to one aspect of the invention, the specific surface area of the pre-cracking catalyst pellets is higher than the specific surface area of the cracking catalyst pellets.

The metallic surface area is the surface of the pellets that is in contact with the reactant (e.g., ammonia). The porosity of the pellets of the present invention allows an increased active surface area and thus an improved efficiency of the reaction.

According to one aspect of the invention, the pre-cracking catalyst pellets and the cracking catalyst pellets have a shape chosen among a spherical shape or a cylindrical shape.

According to one aspect of the invention, the cracking catalyst pellets shape comprises at least one hole extending through each of said pellets.

According to one aspect of the invention, the cracking catalyst pellets have the shape of a cylinder with domed ends and/or a corrugated cylinder shape.

These shapes for the cracking catalyst pellets are beneficial in the ammonia cracking reactor, wherein there are more pressure drop constraints than in the pre-cracking reactor.

According to one aspect of the invention, the pre-cracking catalyst pellets shape comprises no hole extending through each of said pellets.

The shapes of the pre-cracking pellets and the cracking pellets of the invention increases the heat exchanges between the catalysts and the ammonia and are selected according to the typical pressure drop occurring in each of the pre-cracking reactor and ammonia cracking reactor. It leads to an improved reaction.

According to one aspect of the invention, each of the cracking catalyst pellets have a cylindrical shape, with a diameter which is from 8mm to 20 mm and a length which is from 8mm to 20mm.

According to one aspect of the invention, each of the pre-cracking catalyst pellets have a cylindrical shape, with a diameter which is from 3mm to 6 mm and a length which is from 3mm to 6mm.

According to one aspect of the invention, the at least one pre-cracking reactor is an adiabatic pre-cracking reactor.

According to one aspect of the invention, the system comprises at least one heat exchanger upstream the pre-cracking reactor, said heat exchanger being arranged for preheating the ammonia before it enters into the pre-cracking reactor. Such a heat exchanger is also called a preheater.

According to one aspect of the invention, the pre-cracking reactor comprises an inlet arranged to receive the preheated ammonia and an outlet arranged to release the partly converted ammonia feed stream.

According to one aspect of the invention, the heat exchanger is arranged for preheating the ammonia feed stream at a temperature comprised between 350°C and 650°C, preferably around 550°C.

According to one aspect of the invention, the system comprises a plurality of heat-exchangers upstream the pre-cracking reactor arranged for preheating the ammonia feed stream before it enters into the pre-cracking reactor.

The term "adiabatic reactor" is used to denote a chemical reactor, in particular a single volume chemical reactor in which a decrease in temperature from the inlet to the outlet of the reactor is experienced.

In one aspect of the invention, the cracking catalyst bed is arranged for producing the effluent gas from the partly converted ammonia feed stream at a temperature comprised between 500°C and 900°C, preferably between 600°C and 800°C, for example at a pressure of around 30barg.

In one aspect of the invention, the pre-cracking catalyst bed is arranged for producing the partly converted ammonia feed stream comprising ammonia, hydrogen and nitrogen at a temperature comprised between 350°C and 650°C, preferably around 550°C, for example at a pressure of around 30barg.

According to one aspect of the invention, the ammonia cracking reactor is a fire heated reactor comprising one or more catalyst-filled tubes, said tubes being filled at least partially with the cracking catalyst bed.

According to one aspect of the invention, the system comprises a firing chamber in which a combustion of a fuel gas is performed for heating the ammonia cracking reactor.

According to one aspect of the invention, the system comprises a fuel gas stream circulation duct arranged to conduct the fuel gas stream from a fuel gas source to the firing chamber.

According to one aspect of the invention, the pre-cracking reactor, in particular the adiabatic pre-cracking reactor, is a single vessel reactor filled at least partially with the pre-cracking catalyst bed.

A single vessel reactor has a simple geometry and therefore is subjected to less thermal expansion than catalyst-filled tubes. Therefore, a catalyst bed filling such single vessel reactor is subjected to less mechanical stress than a catalyst bed filling a than catalyst-filled tube. The inventors have found that an increased porosity of the pre-cracking catalyst pellets is compatible with this lower mechanical stress.

According to one aspect of the invention, the pre-cracking reactor has a length from 3m to 6m between an inlet and an outlet of said pre-cracking reactor.

According to one aspect of the invention, each of the tubes has a length of around 12m.

According to one aspect of the invention, the single vessel pre-cracking reactor comprises a first pre-cracking catalyst bed and a second pre-cracking catalyst bed, said second pre-cracking catalyst bed being downstream the first pre-cracking catalyst bed in the ammonia feed stream direction, the first and the second pre-cracking catalyst beds being arranged to perform an endothermic cracking reaction of ammonia, the first pre-cracking catalyst bed having an activation temperature that is different from an activation temperature of the second pre-cracking catalyst bed.

According to one aspect of the invention, at least one tube of the ammonia cracking reactor comprises a first cracking catalyst bed and a second cracking catalyst bed, said second cracking catalyst bed being downstream the first cracking catalyst bed in the ammonia feed stream direction, the first and the second cracking catalyst beds being arranged to perform an endothermic cracking reaction of ammonia, the first cracking catalyst bed having an activation temperature that is different from an activation temperature of the second cracking catalyst bed.

According to one aspect of the invention, the system comprises a hydrogen recovery unit arranged for producing the hydrogen product from the effluent gas stream.

According to one aspect of the invention, the ammonia feed stream comprises impurities such as sulfur, oil, chlorine and water under ppm levels. In other words, the purity level of the ammonia feed stream is high and does not cause impurity deposits on the pre-cracking and cracking catalyst beds.

The invention also relates to a method for producing a hydrogen product from ammonia, comprising the steps of:
- Providing an ammonia feed stream;
- Passing the ammonia feed stream to at least one ammonia pre-cracking reactor for producing a partly converted ammonia feed stream comprising ammonia, hydrogen and nitrogen by a pre-cracking reaction, said pre-cracking reactor comprising a pre-cracking catalyst bed comprising from 20 to 60 wt% of nickel, preferably from 25 to 50 wt% of nickel as a pre-cracking catalytically active material,
- Passing the partly converted ammonia feed stream to an ammonia cracking reactor for producing an effluent gas stream comprising hydrogen and nitrogen and optionally also unconverted ammonia by a cracking reaction, said cracking reactor comprising a cracking catalyst bed comprising from 10 wt% to 20 wt% of nickel as a cracking catalytically active material.

According to one aspect of the invention, the method comprises passing the effluent gas stream to a hydrogen recovery unit for producing said hydrogen product and an off-gas stream comprising hydrogen, nitrogen and optionally unconverted ammonia.

A pre-cracking reaction is a reaction in which the feedstock, here the ammonia feed stream, is cracked in advance, upstream a cracking reaction.

According to one aspect of the invention, the step of passing the ammonia feed stream to the pre-cracking reactor is performed in an adiabatic pre-cracking reactor.

According to one aspect of the invention, the method comprises a step of preheating the ammonia feed stream upstream the ammonia feed stream passing to the pre-cracking reactor. In other words, the ammonia feed stream is preheated before the pre-cracking reaction.

According to one aspect of the invention, the preheating is performed in a heat exchanger, also called preheater, said heat exchanger being upstream the pre-cracking reactor in the ammonia feed stream direction.

According to one aspect of the invention, the ammonia feed stream is preheated at a temperature comprised between 350°C and 650°C, preferably at a temperature of around 550°C.

According to one aspect of the invention, the preheating step is not performed in the pre-cracking reactor.

In one aspect of the invention, the pre-cracking reaction is performed with a conversion rate being lower than a cracking reaction conversion rate.

According to one aspect of the invention, the pre-cracking reaction has a catalytic conversion rate comprised between 10% and 90%, preferably between 15% and 50%, preferably between 15% and 35%.

In one aspect of the invention, the pre-cracking reaction is realized at a lower temperature than the cracking reaction.

In one aspect of the invention, the pre-cracking reaction is performed at a temperature between 350°C and 650°C, preferably around 550°C, for example at a pressure of around 30 barg.

In one aspect of the invention, the cracking reaction is performed at a temperature between 500°C and 900°C, preferably between 600°C and 800°C, for example at a pressure of around 30 barg.

According to one aspect of the invention, the pre-cracking reaction is performed in the pre-cracking catalyst bed. In particular, said pre-cracking catalyst bed comprises a pre-cracking carrier with said pre-cracking catalytically active material on the pre-cracking carrier. Said pre-cracking carrier comprises for example a material chosen among MgO, or CaO(Al₂O₃)ₙ, or MgAl₂O₄, or AL₂O₃, or ZrO₂.

According to one aspect of the invention, the pre-cracking reaction is performed in the pre-cracking catalyst bed comprising a plurality of pre-cracking catalyst pellets comprising the pre-cracking carrier and the pre-cracking catalytically active material on the pre-cracking carrier.

According to one aspect of the invention, the cracking reaction is performed in the cracking catalyst bed. In particular, said cracking catalyst bed comprises a cracking carrier with said cracking catalytically active material on the cracking carrier. Said cracking carrier comprises for example a material chosen among Al₂O₃, in particular α-Al₂O₃, CaIAl₂O₄, in particular α-CaIAl₂O₄, or K/CaAl₂O₄, or α-K/CaAl₂O₄, or CaK2Al22O34, or MgAl₂O₄.

According to one aspect of the invention, the cracking reaction is performed in the cracking catalyst bed comprising a plurality of cracking catalyst pellets comprising the cracking carrier and the cracking catalytically active material on the cracking carrier.

According to one aspect of the invention, the pre-cracking catalyst pellets and the cracking catalyst pellets have a metallic surface area, the metallic surface area of the pre-cracking catalyst pellets being higher than the metallic surface area of the cracking catalyst pellets. In particular, the metallic surface area of the pre-cracking catalyst pellets is 50% more or, 25% more times the metallic surface area of the cracking catalyst pellets.

According to one aspect of the invention, the metallic surface area of the pre-cracking catalyst pellets is comprised between 10 m2.g-1 and 35 m2.g-1.

According to one aspect of the invention, the metallic surface area of the cracking catalyst pellets is comprised between 2 m2.g-1 and 4 m2.g-1.

According to one aspect of the invention, the nickel dispersion in the pre-cracking catalyst pellets is comprised between 3% and 9%.

According to one aspect of the invention, the nickel dispersion in the cracking catalyst pellets is comprised between 3% and 6%.

According to one aspect of the invention, the average nickel crystallite size in the pre-cracking catalyst pellets is comprised between 10 nm and 30 nm.

According to one aspect of the invention, the average nickel crystallite size in the cracking catalyst pellets is comprised between 15 nm and 40 nm.

According to one aspect of the invention, the metallic surface area of the pre-cracking catalyst pellets, the nickel dispersion in the pre-cracking catalyst pellets, and/or the average nickel crystallite size in the pre-cracking catalyst pellets is measured by hydrogen chemisorption analysis, the metallic surface area, the nickel dispersion, and/or the average nickel crystallite size being determined from the hydrogen adsorption isotherms, in particular following the ASTM D3908-20 standard procedure.

According to one aspect of the invention, the metallic surface area of the cracking catalyst pellets, the nickel dispersion in the cracking catalyst pellets, and/or the average nickel crystallite size in the cracking catalyst pellets is measured by hydrogen chemisorption analysis, the metallic surface area, the nickel dispersion, and/or the average nickel crystallite size being determined from the hydrogen adsorption isotherm, in particular following the ASTM D3908-20 standard procedure.

In particular, prior to the hydrogen chemisorption measurement, the pre-cracking catalyst or the cracking catalyst is degassed between 150°C and 250°C, under vacuum, with a temperature rate comprised between 1°C and 10°C per minute and then maintained in that state during a time of between 1 and 2 hours.

Then, the degassed pre-cracking catalyst is reduced between 350°C and 450°C or the degassed cracking catalyst is reduced between 450°C and 600°C, by flowing pure hydrogen at a temperature rate between 1°C and 10°C per minute. The pre-cracking catalyst or cracking catalyst is then maintained in that state during a time of between 1 and 2 hours.

The pre-cracking catalyst or the cracking catalyst is next evacuated at a similar temperature than for the reduction, under vacuum, during a time of between 1 and 2 hours, to remove the adsorbed hydrogen from the surface.

The pre-cracking catalyst or the cracking catalyst is then cooled to 40°C to get to the temperature for the hydrogen chemisorption measurement.

Hydrogen is then titrated incrementally onto the catalyst at 40°C and the pressure is recorded after each incremental increase of pressure allowing enough time to reach equilibrium.

In particular, the ASTM D3908-20 standard is applied for calibration.

According to one aspect of the invention, the porosity of the pre-cracking catalyst pellets is higher than the porosity of the cracking catalyst pellets.

According to one aspect of the invention, the specific surface area of the pre-cracking catalyst pellets is higher than the specific surface area of the cracking catalyst pellets.

The metallic surface area is the surface of the pellets that is in contact with the reactant (e.g., ammonia). The porosity of the pellets of the present invention allows an increased active surface area and thus an improved efficiency of the reaction.

According to one aspect of the invention, the pre-cracking catalyst pellets and the cracking catalyst pellets have a shape chosen among a spherical shape, or a cylindrical shape.

According to one aspect of the invention, the cracking catalyst pellets shape comprises at least one hole extending through each of said pellets.

According to one aspect of the invention, the cracking catalyst pellets have the shape of a cylinder with domed ends and/or a corrugated cylinder shape.

These shapes for the cracking catalyst pellets are beneficial in the ammonia cracking reactor, wherein there are more pressure drop constraints than in the pre-cracking reactor.

According to one aspect of the invention, the pre-cracking catalyst pellets shape comprises no hole extending through each of said pellets.

The shapes of the pre-cracking pellets and the cracking pellets of the invention increases the heat exchanges between the catalysts and the ammonia and are selected according to the typical pressure drop occurring in each of the pre-cracking reactor and ammonia cracking reactor. It leads to an improved reaction.

According to one aspect of the invention, each of the cracking catalyst pellets have a cylindrical shape, with a diameter which is from 8 mm to 20 mm and a length which is from 8 mm to 20 mm.

According to one aspect of the invention, each of the pre-cracking catalyst pellets have a cylindrical shape, with a diameter which is from 3 mm to 6 mm and a length which is from 3 mm to 6 mm.

According to one aspect of the invention, the method comprises a step of heating the cracking reactor, said heating step comprising combusting a fuel gas stream in a combustion reaction performed in a firing chamber, thereby generating said heat.

According to one aspect of the invention, the fuel gas is provided to the firing chamber by a fuel gas stream circulation duct.

According to one aspect of the invention, the method comprises a step of routing a first part of the partly converted ammonia from the pre-cracking reaction to the firing chamber.

According to one aspect of the invention, the ammonia feed stream circulates in a single direction in the pre-cracking reactor.

According to one aspect of the invention, co-product steam production during the production of hydrogen product is reduced compared to a SMR reaction. Preferably, co-product steam production during the pre-cracking and cracking reactions is avoided.

The invention also relates to the use of a system for cracking ammonia to produce hydrogen product, said system comprising:
- at least one pre-cracking reactor arranged to receive an ammonia feed stream for producing a partly converted ammonia feed stream comprising ammonia, hydrogen and nitrogen, said at least one pre-cracking reactor comprising a pre-cracking catalyst bed comprising from, 20 wt% to 60 wt% of nickel, preferably from 25 wt% to 50 wt% of nickel, as a pre-cracking catalytically active material,
   - at least one ammonia cracking reactor arranged to receive the partly converted ammonia feed stream for producing an effluent gas stream comprising hydrogen and nitrogen and optionally also unconverted ammonia, said ammonia cracking reactor comprising a cracking catalyst bed comprising from 10 wt% to 20 wt% of nickel as a cracking catalytically active material.

Further features, details and advantages of the invention will become more clearly apparent from reading the description given below by way of indication with reference to the drawings, in which:
[Fig 1] is a schematic view of the system according to the invention,
[Fig 2] is a schematic view of the method according to the invention.

It should first of all be noted that the figures disclose the invention in a detailed manner so as to implement the invention, and said figures may of course serve to define the invention more clearly, where necessary.

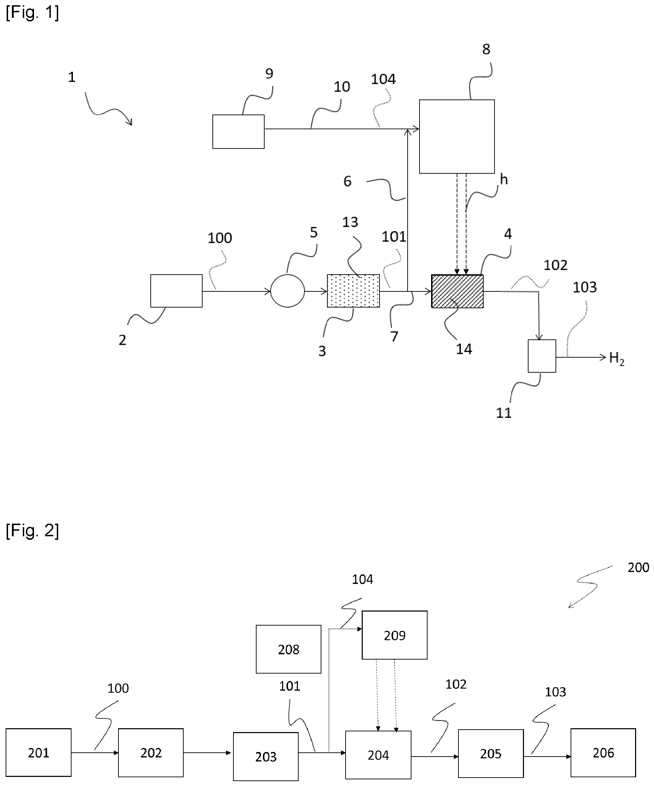

Figure 1 is a schematic representation of the system for producing hydrogen product from ammonia of the invention. The system 1 comprises:
- a pre-cracking reactor 3 arranged for producing a partly converted ammonia feed 101 comprising ammonia, hydrogen and nitrogen, from an ammonia feed stream 100 coming from an ammonia source 2, said pre-cracking reactor 3 comprising a pre-cracking catalyst bed 13 comprising from 20 wt% to 60 wt% of nickel, preferably from 25 wt% to 50 wt% of nickel as a pre-cracking catalytically active material,
- one ammonia cracking reactor 4 arranged to receive the partly converted ammonia feed stream 101 for producing an effluent gas stream 102 comprising hydrogen and nitrogen and optionally also unconverted ammonia, said ammonia cracking reactor 4 comprising a cracking catalyst bed 14 comprising from 10 wt% to 20 wt% of nickel as a cracking catalytically active material.

Nickel has a high catalytic activity, leading to a high conversion rate at the chosen composition. Furthermore, nickel has a good kinetics at reasonable costs.

The pre-cracking 13 and the cracking 14 catalyst beds have specific features disclosed below.

The pre-cracking catalyst bed 13 comprises a pre-cracking carrier with said pre-cracking catalytically active material on the pre-cracking carrier, the pre-cracking carrier comprising a material chosen among MgO, CaO(Al₂O₃)ₙ, MgAl₂O₄, AL₂O₃, ZrO₂. The pre-cracking catalyst bed comprises a plurality of pre-cracking catalyst pellets comprising said pre-cracking catalytically active material on said pre-cracking carrier.

The cracking catalyst bed 14 comprises a cracking carrier with said cracking catalytically active material on the cracking carrier, the cracking carrier comprising a material chosen among in particular α-Al₂O₃, CaIAl₂O₄, in particular α-CaIAl₂O₄, K/CaAl₂O₄, α-K/CaAl₂O₄, CaK2Al22O34, MgAl₂O₄. The cracking catalyst bed comprises a plurality of cracking catalyst pellets comprising said cracking catalytically active material on said cracking carrier.

These selected carriers of the cracking catalyst bed and pre-cracking catalyst bed improve the stability of the catalyst beds 13, 14 and thus improve reaction efficiency.

The metallic surface area of the pre-cracking catalyst pellets is higher than the metallic surface area of the cracking catalyst pellets. In particular, the metallic surface area of the pre-cracking catalyst pellets is 50% or 25% more times the metallic surface of the cracking catalyst pellets. For example, the metallic surface of the pre-cracking catalyst pellets is between 10 m².g⁻¹ and 35 m².g-1, and the metallic surface area of the cracking catalyst pellets is between 2 m².g⁻¹ and 4 m².g-1.

Here, the nickel dispersion in the pre-cracking catalyst pellets is between 3% and 9% and the nickel dispersion in the cracking catalyst pellets is between 3% and 6%.

In this example, the average nickel crystallite size in the pre-cracking catalyst pellets is comprised between 10nm and 30nm, and the average nickel crystallite size in the cracking catalyst pellets is comprised between 15nm and 40nm.

In this example, the metallic surface area of the pre-cracking catalyst pellets, the nickel dispersion in the pre-cracking catalyst pellets, and/or the average nickel crystallite size in the pre-cracking catalyst pellets is measured by hydrogen chemisorption analysis, the metallic surface area, the nickel dispersion, and/or the average nickel crystallite size being determined from the hydrogen adsorption isotherms, in particular following the ASTM D3908-20 standard procedure.

The porosity of the pre-cracking catalyst pellets is higher than the porosity of the cracking catalyst pellets, and the specific surface area of the pre-cracking catalyst pellets is higher than the specific surface area of the cracking catalyst pellets.

The specific features of the pre-cracking and cracking catalyst pellets (metallic surface area, nickel dispersion, nickel crystallite size, porosity, specific surface area) lead to an improved efficiency of the catalysts and thus a better conversion rate in the pre-cracking reactor 3 and in the cracking reactor 4.

The pre-cracking catalyst pellets and the cracking catalyst pellets have a shape chosen among a spherical shape or a cylindrical shape. The cracking catalyst pellets may have a shape comprising at least one hole extending through each of said pellets and/or may have a shape of a cylinder with domed ends and/or a corrugated cylinder shape. These shapes for the cracking catalyst pellets are beneficial in the ammonia cracking reactor, wherein there are more pressure drop constraints than in the pre-cracking reactor. For example, the pre-cracking pellets shape comprises no hole extending through each of said pellets. The shapes of the pre-cracking pellets and the cracking pellets of the invention increases the heat exchanges between the catalysts and the ammonia and are selected according to the typical pressure drop occurring in each of the pre-cracking reactor 3 and cracking reactor 4.

The pre-cracking reactor 3 is an adiabatic pre-cracking reactor. The system 1 comprises at least one heat exchanger 5 upstream the pre-cracking reactor 3, said heat exchanger being arranged for preheating the ammonia feed stream 100 before it enters into the pre-cracking reactor 3 at a temperature comprised between 350°C and 650°C, preferably around 550°C. Such a heat exchanger is also called a preheater.

In an embodiment not represented here, the system 1 comprises a plurality of heat-exchangers upstream the pre-cracking reactor arranged for preheating the ammonia feed stream before it enters into the pre-cracking reactor.

The cracking catalyst bed 14 is arranged for producing the effluent gas 102 from the partly converted ammonia feed stream at a temperature comprised between 500°C and 900°C, preferably between 600°C and 800°C, for example at a pressure of around 30 barg.

The pre-cracking catalyst bed 13 is arranged for producing the partly converted ammonia feed stream 101 comprising ammonia, hydrogen and nitrogen at a temperature comprised between 350°C and 650°C, preferably around 550°C, for example at a pressure of around 30 barg.

The ammonia cracking reactor 4 is a fire heated reactor comprising one or more catalyst-filled tubes, said tubes being filled at least partially with the cracking catalyst bed 14. Each of the tubes has a length of around 12m.

The system 1 comprises a firing chamber 8 in which a combustion of a fuel gas is performed for heating the cracking reactor 4. The system 1 comprises thus a fuel gas stream circulation duct 10 arranged to conduct the fuel gas stream 104 from a fuel gas source 9 to the firing chamber 9. In an embodiment not represented here, the fuel gas source is the ammonia feed stream 100.

The system 1 comprises a partly converted ammonia feed stream circulation duct 6 arranged to conduct a first part of the partly converted ammonia feed stream from the pre-cracking reactor 3 to a fuel gas stream circulation duct 10 or to the firing chamber 8, and a second part of the partly converted ammonia feed stream is conducted to the cracking reactor 4.

The cracking reactor 4 is heated by combusting said first part of partly converted ammonia feed stream in the combustion reaction performed in the firing chamber, thereby generating said heat h. The pre-cracking reactor 3, in particular the adiabatic pre-cracking reactor, is a single vessel reactor filled at least partially with the pre-cracking catalyst bed 13. The pre-cracking reactor 13 has a length from 3m to 6m between the inlet and the outlet of said pre-cracking reactor 3.

The system 1 comprises a hydrogen recovery unit 11 arranged for producing the hydrogen product 103 from the effluent gas stream 102. [Fig 2] is a schematic representation of the method for producing hydrogen product from ammonia of the invention. The method 200 comprises the following steps:

The invention also relates to a method 200 for producing a hydrogen product from ammonia, comprising the steps of:
- Providing 201 an ammonia feed stream 100;
- Passing the ammonia feed stream 100 to at least one ammonia pre-cracking reactor 203 for producing a partly converted ammonia feed stream 101 comprising ammonia, hydrogen and nitrogen by a pre-cracking reaction, said pre-cracking reactor comprising a pre-cracking catalyst bed comprising from 20 wt% to 60 wt% of nickel, preferably from 25 wt% to 50 wt% of nickel, as a pre-cracking catalytically active material,
- Passing the partly converted ammonia feed stream 101 to an ammonia cracking reactor 204 for producing an effluent gas stream 102 comprising hydrogen and nitrogen and optionally also unconverted ammonia by a cracking reaction, said cracking reactor comprising a cracking catalyst bed comprising from 10 wt% to 20 wt% of nickel as a cracking catalytically active material;
- Passing the effluent gas stream 102 to a hydrogen recovery unit 205 for producing said hydrogen product 103 and an off-gas stream comprising hydrogen, nitrogen and optionally unconverted ammonia.

The step 203 of passing the ammonia feed stream to the pre-cracking reactor is performed in an adiabatic pre-cracking reactor. In other words, the heat supplied to the pre-cracking reactor is negligible, there is thus a decrease in temperature from the inlet to the outlet of the pre-cracking reactor.

The method comprises a step of preheating 202 the ammonia feed stream 100 upstream the step of passing the ammonia feed stream to the pre-cracking reactor 203. In other words, the ammonia feed stream is preheated before the pre-cracking reaction. The preheating step 202 is performed in a heat exchanger, also called preheater, said heat exchanger being upstream the pre-cracking reactor in the ammonia feed stream 100 direction. The ammonia feed stream 100 is preheated at a temperature comprised between 350°C and 650°C, preferably at a temperature of around 550°C. The preheating step 202 is not performed in the pre-cracking reactor and is performed before the step of passing to the pre-cracking reactor, and thus before the pre-cracking reaction.

The pre-cracking reaction is realized at a lower temperature than the cracking reaction.

The pre-cracking reaction is performed at a temperature between 350°C and 650°C, preferably around 550°C, for example at a pressure of around 30 barg. The cracking reaction is performed at a temperature between 500°C and 900°C, preferably at a temperature between 600°C and 800°C, for example at a pressure of around 30barg.

The pre-cracking reaction is performed in the pre-cracking catalyst bed as disclosed previously. The cracking reaction is performed in the cracking catalyst bed as disclosed previously.

The method 200 comprises a step of heating the cracking reactor 209, said heating step 209 comprising combusting a fuel gas stream 104 into a flue gas stream in a combustion reaction performed in a firing chamber. The fuel gas is provided to the firing chamber by a fuel gas stream circulation duct.

The method comprises a step 208 of routing a first part of the partly converted ammonia 101 from the pre-cracking reaction to the firing chamber.

The ammonia feed stream circulates in a single direction in the pre-cracking reactor.

The method comprises a step 206 of processing the hydrogen product, for example a step of purifying the hydrogen product.

## Claims

1. Method (200) for producing a hydrogen product from ammonia, comprising the steps of:
- Providing an ammonia feed stream (201);
- Passing the ammonia feed stream to at least one ammonia pre-cracking reactor for producing a partly converted ammonia feed stream comprising ammonia, hydrogen and nitrogen by a pre-cracking reaction (203), said pre-cracking reactor comprising a pre-cracking catalyst bed comprising from 20 wt% to 60 wt% of nickel, preferably from 25 wt% to 50 wt% of nickel as a pre-cracking catalytically active material,
- Passing the partly converted ammonia feed stream to an ammonia cracking reactor for producing an effluent gas stream comprising hydrogen and nitrogen and optionally also unconverted ammonia by a cracking reaction (204), said cracking reactor comprising a cracking catalyst bed comprising from 10 wt% to 20 wt% of nickel as a cracking catalytically active material.

2. Method (200) according to claim 1, wherein the pre-cracking reaction (203) is performed in the pre-cracking catalyst bed, said pre-cracking catalyst bed comprising a pre-cracking carrier with said pre-cracking catalytically active material on the pre-cracking carrier and the cracking reaction (204) is performed in the cracking catalyst bed, said cracking catalyst bed comprising a cracking carrier with said cracking catalytically active material on the cracking carrier.

3. Method according to the preceding claim, wherein, the pre-cracking carrier comprises a material chosen among MgO, or CaO(AI2O3)n, or MgAl2O4, or AL₂O₃, or ZrO2 and the cracking carrier comprises a material chosen among Al2O3, in particular α-Al2O3, CaIAl2O4, in particular α-CaIAl2O4, or K/CaAl₂O₄, or α-K/CaAl2O4, or CaK2Al22O34, or MgAl₂O₄.

4. Method (200) according to one of claims 2 or 3, wherein the pre-cracking reaction (203) is performed in the pre-cracking catalyst bed comprising a plurality of pre-cracking catalyst pellets comprising the pre-cracking carrier and the pre-cracking catalytically active material on the pre-cracking carrier and the cracking reaction (204) is performed in the cracking catalyst bed comprising a plurality of cracking catalyst pellets comprising the cracking carrier and the cracking catalytically active material on the cracking carrier.

5. Method (200) according to claim 4, wherein the pre-cracking catalyst pellets and the cracking catalyst pellets have a metallic surface area, the metallic surface area of the pre-cracking catalyst pellets being higher than the metallic surface area of the cracking catalyst pellets.

6. Method (200) according to claim 4 or 5, wherein a nickel dispersion in the pre-cracking catalyst pellets is comprised between 3% and 9% and a nickel dispersion in the cracking catalyst pellets is comprised between 3% and 6%.

7. Method (200) according to one of claims 4 to 6, wherein an average nickel crystallite size in the pre-cracking catalyst pellets is comprised between 10 and 30 nm, and an average nickel crystallite size in the cracking catalyst pellets is comprised between 15 and 40 nm.

8. Method (200) according to one of claims 4 to 7, wherein the porosity of the pre-cracking catalyst pellets is higher than the porosity of the cracking catalyst pellets.

9. Method (200) according to one of claims 4 to 8, wherein the specific surface area of the pre-cracking catalyst pellets is higher than the specific surface area of the cracking catalyst pellets.

10. Method (200) according to one of claims 4 to 9, wherein the cracking catalyst pellets have a cylindrical shape and have the shape of a cylinder with domed ends and/or a corrugated cylinder shape.

11. Method (200) according to one of claims 4 to 10, wherein the cracking catalyst pellets shape comprises at least one hole extending through each of said pellets.

12. System (1) for producing a hydrogen product from ammonia comprising:
- at least one pre-cracking reactor (3) arranged to receive an ammonia feed stream for producing a partly converted ammonia feed stream comprising ammonia, hydrogen and nitrogen, said at least one pre-cracking reactor (3) comprising a pre-cracking catalyst bed (13) comprising from, 20 wt% to 60 wt% of nickel, preferably from 25 wt% to 50 wt% of nickel, as a pre-cracking catalytically active material,
- at least one ammonia cracking reactor (4) arranged to receive the partly converted ammonia feed stream for producing an effluent gas stream comprising hydrogen and nitrogen and optionally also unconverted ammonia, said ammonia cracking reactor (4) comprising a cracking catalyst bed (14) comprising from 10 wt% to 20 wt% of nickel as a cracking catalytically active material.

13. System (1) according to claim 12, wherein the pre-cracking catalyst bed (13) comprises a pre-cracking carrier with said pre-cracking catalytically active material on the pre-cracking carrier and wherein the cracking catalyst bed (14) comprises a cracking carrier with said cracking catalytically active material on the cracking carrier.

14. System (1) according to claim 13, wherein the pre-cracking catalyst bed (13) comprises a plurality of pre-cracking catalyst pellets comprising the pre-cracking carrier and the pre-cracking catalytically active material on the pre-cracking carrier, and the cracking catalyst bed (14) comprises a plurality of cracking catalyst pellets comprising the cracking carrier and the cracking catalytically active material on the cracking carrier.

15. System (1) according to claim 14, wherein a metallic surface area of the pre-cracking catalyst pellets is higher than a metallic surface area of the cracking catalyst pellets.
